**Europäisches Patentamt**

(19) **European Patent Office**

**Office européen des brevets**

(11) Publication number : **0 393 475 B1**

(12) # EUROPEAN PATENT SPECIFICATION

(45) Date of publication of patent specification :
30.12.92 Bulletin 92/53

(51) Int. Cl.⁵ : **B60J 10/02**

(21) Application number : **90106810.6**

(22) Date of filing : **10.04.90**

(54) **Mixed elastomer/metal weather strip for fixed glasses of motor vehicles and pre-assembly method therefor.**

(30) Priority : **19.04.89 IT 6728589**

(43) Date of publication of application :
**24.10.90 Bulletin 90/43**

(45) Publication of the grant of the patent :
**30.12.92 Bulletin 92/53**

(84) Designated Contracting States :
**DE ES FR GB SE**

(56) References cited :
**EP-A- 0 096 533**
**FR-A- 976 760**
**GB-A- 987 565**
**GB-A- 2 184 767**
**US-A- 2 257 603**

(73) Proprietor : **GILARDINI S.p.A.**
**Via Cuneo No. 20**
**I-10152 Turin (IT)**

(72) Inventor : **Ocera, Rosario**
**Corso Brunelleschi 119**
**I-10100 Torino (IT)**

(74) Representative : **Modiano, Guido et al**
**c/o Modiano & Associati S.r.l. Via Meravigli, 16**
**I-20123 Milano (IT)**

## Description

The present invention relates to a weather strip or gasket for fixed glasses of motor vehicles, such as the windshield and the rear window, coupled to the bodywork by glueing through an adhesive bead interposed between the glass and the depressed frame of the respective containment and retention seat.

As is known, current glasses coupled by glueing are provided with a continuous peripheral weather strip which has a channel-shaped seat accommodating the edge of the glass and a continuous lip resting on the bodywork of the vehicle.

Said known weather strips, made of elastomer or polymer material, may have a single profile or profiles with differentiated portions, can have coextruded or fitted metallic inserts, can extend on the entire perimeter of the glass or be limited to portions thereof, but in any case perform no function of retaining said glass to the bodywork, as this function as well as the sealing action are ensured exclusively by the structural bead of interposed adhesive.

The functions of said weather strips are therefore mainly the one of centering the glass in the respective assembly seat, with compensation of the size tolerances of the glass and of the seat, and the aesthetic function, since they act as joint covering to ensure continuity and connection between the bodywork and the glass. Said weather strips are preliminarily fitted on the glass by manually inserting the edge of the glass in the appropriate channel-shaped seat of the weather strip, usually with the aid of lubricating fluids, whereafter the weather-stripped glass is stored to be sent to the subsequent assembly operations, which consist of the application of the adhesive bead and of its assembly onto the bodywork.

Such known weather strips have numerous disadvantages, both in functional terms and in terms of assembly operations.

In functional terms, known weather strips perform their aesthetic function of joint covering only for the outer part of the glass, i.e. by connecting the latter to the bodywork only on the outer side.

On the inner side, the edge of the glass and the adhesive bead are not covered by the weather strip, and thus remain in view. Attempts are made to obviate this with various solutions, the most widespread of which consists in the strategic placement of the dashboard, of the window-post coverings and of the roof panel; however, this solution can be adopted only for the windshield.

In the case of the rear window, an additional profiled element is instead inserted and applied from the inside of the passenger compartment into the seat delimited between the glass and the sheet metal of the bodywork. This insertion operation, performed manually from the inside of the passenger compartment, eliminates to a great extent the advantages provided by the glueing system with respect to conventional mechanical glass retention systems. The glueing system in fact allows the complete automation of the operations for assembling the glass to the bodywork; these operations are all performed from the outside in order to eliminate any manual intervention from the inside of the passenger compartment which, besides slowing down production rates, requires the undesirable opening of the doors on the assembly lines.

In known weather strips, the channel-shaped seat intended to receive the edge of the glass furthermore has a necessarily shallow depth so as not to cover the region of the glass which is intended to receive the adhesive bead, i.e. the interface region between the frame of the containment seat and said glass. On one hand, this complicates the weather strip fitting operation, which in any case cannot be automated, and on the other it makes unstable the anchoring of said weather strip, which tends to slip off easily during the unavoidable handling of the glass, forcing to perform checks and verifications which significantly delay the manufacturing processes.

The aim of the present invention is to eliminate these severe disadvantages, and within this aim it provides a weather strip for fixed glued glasses adapted to achieve the following particular objects:

- fulfil an aesthetic function, acting as a joint covering suitable for concealing the adhesive bead and the frame of the glass seat on the inner side of the passenger compartment as well,

- ensure effective retention to the glass, avoiding the disengagement of said weather strip during handling and/or movement and glass assembly operations,

- to be firmly retained, once the glass has been assembled, by the structural adhesive bead which couples said glass.

The invention furthermore has the object of providing a weather strip for fixed glasses adapted to be manufactured with various profiles, either continuous or variable in sections and mutually coupled by vulcanization in a mold and adapted to bear possible coextruded aesthetic moldings which extend on all of the perimeter or part thereof.

A further important object of the present invention is to provide a weather strip which can be fitted beforehand on the edge of the glass with automatic operations which can be performed with a very simple and reliable apparatus, as will become apparent from the following description, the weather strip being suitable to easily adapt to curved portions even with high curvature.

In order to achieve this aim, these important objects and others which will become apparent from the following detailed description, the present invention relates to a mixed-structure weather strip for glued glasses, as defined in appended claim 1.

According to an embodiment of the invention, the first profiled element comprises a widened band and a ridge which define an L-shaped depressed seat intended to receive the edge of the glass. The extension of the ridge is substantially equal to the thickness of the glass, and the corresponding edge of the insert is restrained in said ridge, while the transverse extension of the insert is such as to cause the second internal profiled element to arrange above the glass region intended to receive the adhesive bead.

The insert therefore extends on the glueing region but does not compromise said glueing due to its discontinuous nature. In fact, advantageously, the known insert constituted by a continuous steel wire bent into a sinusoid and reinforced with textile fibers interwoven therewith, commercially known by the names "Wire-Carrier" or "shlegel insert", is used. When the glass is assembled, the insert is therefore partially embedded in the adhesive bead, ensuring the firm retention of the weather strip. The operations for coupling the weather strip to the glass are performed by folding the insert by continuous rolling.

Further developments in line with the claimed weather strip and a method for pre-assembling same on a glass are referred to in the claims appended to claim 1.

Further purposes, characteristics and advantages will become apparent from the following detailed description and with reference to the accompanying drawings, given by way of non-limitative example, wherein:

figure 1 is a perspective view of a portion of mixed-structure weather strip according to the invention,

figure 2 is a detail view of the insert of the weather strip,

figure 3 is a partial plan view from the inner side of a glass on which the weather strip of figure 1 is fitted, after the rolling operation,

figure 4 is an enlarged-scale sectional view, taken along the line IV-IV of figure 3, illustrating in detail the glass and the fitted and rolled weather strip,

figure 5 is a sectional view of the end edge of the glass and of the related containment seat in the bodywork of the motor vehicle, after the assembly and glueing of the glass,

figures 6a-6b-6c-6d are schematic sectional views illustrating the procedures for preliminary fitting the weather strip on the glass,

figure 7 is a perspective view of the final step for folding the insert by rolling,

figure 8 is a partial perspective view of the glass with the weather strip pre-assembled.

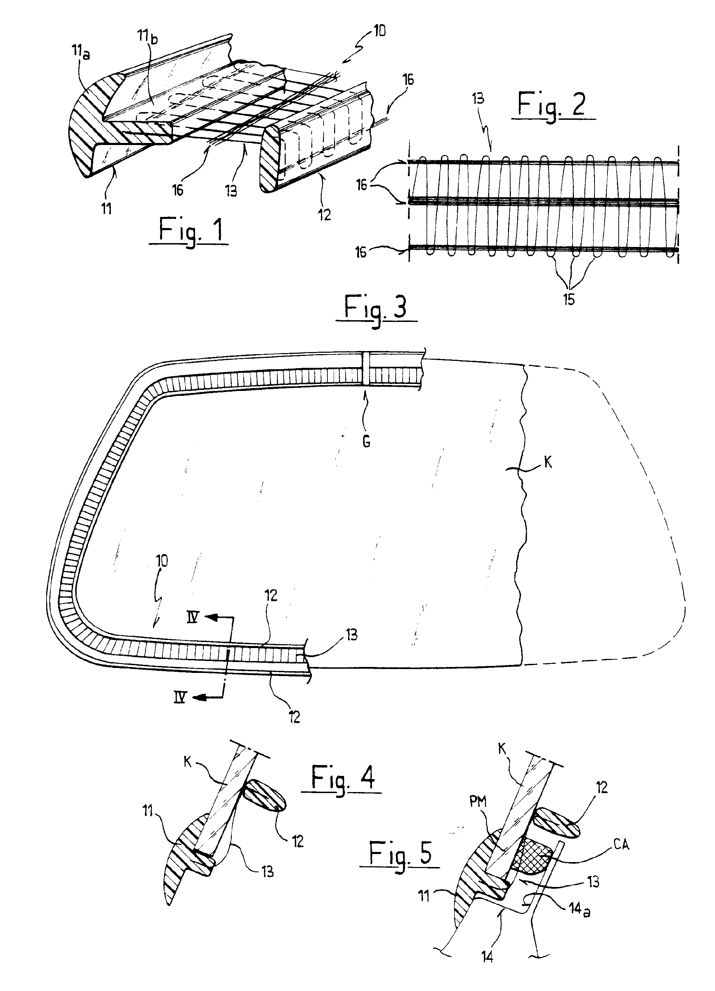

Initially with reference to figures 1 to 5, 10 generally indicates the weather strip with mixed structure substantially composed of a first profiled element 11 of elastomer material, advantageously rubber of adequate hardness, for example 65÷70 shore, of a second profiled element 12 also of elastomer material, and of a deformable metallic insert 13 which is interposed between and connects said first and second profiled elements.

The profiled elements 11-12 and the insert 13 which connects them are coextruded so that the edges of the insert are embedded in the respective profiled elements.

The first profiled element 11 is intended to arrange on the outer side of the glass K for coupling the latter to the bodywork, acting substantially as a joint covering and a centering element for said glass, suitable for compensating the tolerances between the glass and the related containment seat 14 formed on the bodywork C of the vehicle (figure 5).

For this purpose, the profiled element 11 comprises a widened band 11a and a ridge 11b so as to have, in cross section, a substantially T-shaped profile. One of the wings of the T-shaped band is intended to adhere to the glass and the other one is intended to adhere to the edge of the seat 14 of the bodywork (figure 5); the band can have visible aesthetic moldings of various kinds, also provided by coextrusion with the profiled element.

The ridge 11b has a transverse extension which is approximately equal to the thickness of the glass, and the corresponding edge of the metallic insert 13 is fixed therein. The other edge of the insert, which is substantially bent at right angles, is embedded in the second profiled element 12 which is preferably constituted by a simple wing or lip and has a substantially elliptical profile in cross section.

The insert 13 is of the known type termed "Wire-Carrier" or "shlegel insert" and is composed, as illustrated in figure 2, of a coextruded steel wire 15 bent into a sinusoid shape and reinforced with textile fibers 16 interwoven with said wire.

As clearly illustrated in figure 4, the profile 12 is arranged inside the glass by virtue of the folding of the insert 13 on said glass along the marginal portion PM of the glass intended to receive the bead CA of structural adhesive which couples said glass to the abutment frame 14a of the seat 14. The transverse extension of the insert is chosen so that after folding the second profiled element 12 is arranged beyond the bead CA, which includes the insert 13, ensuring firm anchoring of the weather strip when installed. This substantial transverse extension, typically comprised between fifteen and twenty millimeters, furthermore ensures firm preliminary retention of the weather strip 10 onto the glass K, preventing accidental disengagements thereof during handling, transport and storage of the glasses prior to their assembly onto the related bodyworks.

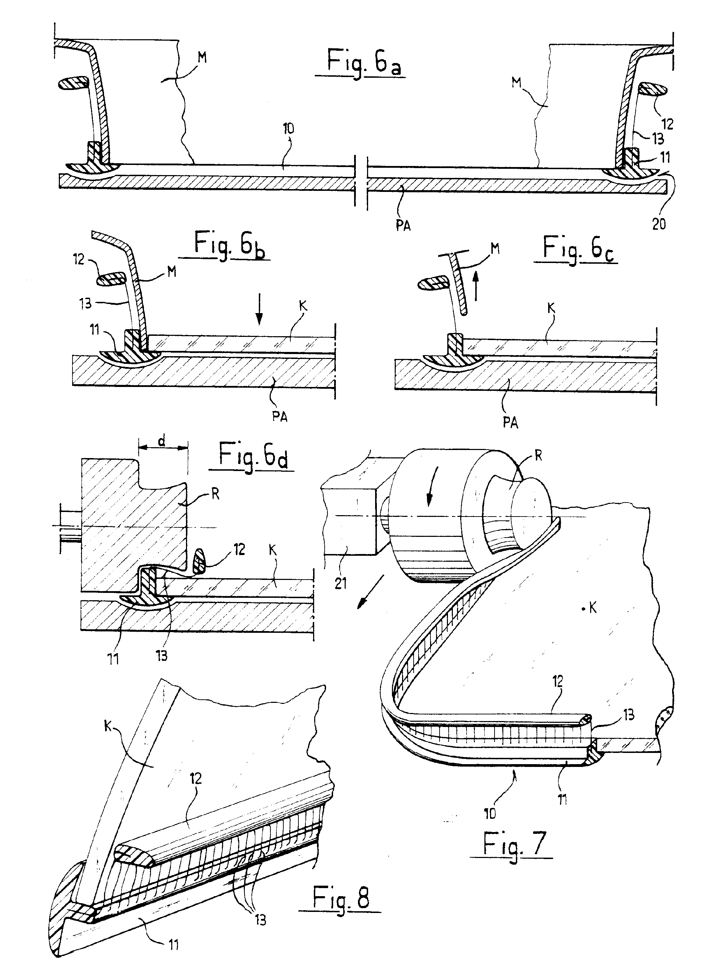

The nature of the insert and the general structure of the weather strip also allow to automate the operations for preliminary fitting the weather strip on the glass. For this purpose, one advantageously proceeds as indicated in the sequence of figures 6a to 6d and of figure 7, and precisely:

- the weather strip 10, closed beforehand in a loop by means of a joint G which is mold-vulcanized (see figure 3), is laid-down on a resting plane PA with the insert 13 directed upward (figure 6a); said plane defines a groove 20 for centering and retaining the profiled element 11,

- a funnel-shaped mask M, having the same profile as the glass K and such dimensions as to contain said glass inside it, is placed on the laid-down weather strip to allow the glass K to be lowered into the mask and moved to abut against the inner wing of the profiled element 11 (figure 6b),

- the mask is removed, extracting it upward (figure 6c),

- the insert 13 is continuously folded onto the inner side of the glass by means of a presser roller R which is freely rotatably supported by a truck 21 which moves along a path which is parallel to the edge of the glass (figures 6d-7); the roller is preferably rubber-covered at least at its active part, the extension "d" whereof is slightly smaller than the free transverse extension of the insert 13.

The details of execution and the embodiments may naturally be varied extensively with respect to what is described and illustrated by way of non-limitative example without altering the concept of the invention and without thereby abandoning the scope of said invention as defined in the claims.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A mixed structure weather strip for fixed glued glasses of motor vehicles, characterized by a first profiled element (11) of elastomer material intended to be located on the outer side of a glass (K) for coupling said glass to a bodywork (C), a second profiled element (12) of elastomer material, intended to be located inside the glass for concealing an adhesive bead (CA) and a deformable metallic insert (13) interposed between and connecting said first and second profiled elements, end edges of said insert (13) being embedded by coextrusion in the corresponding profiled elements (11,12) which arrange themselves on the respective outer and inner sides of the glass by virtue of a fold of said insert obtained during the application of the weather strip.

2. A weather strip according to claim 1, wherein said first external profiled element (11) comprises a widened band (11a) and a ridge (11b) which define a depressed L-shaped seat intended to receive the edge of the glass (K) and wherein the band and the ridge have, in cross section, an overall T-shaped profile which defines two wings of the band, one of which is intended to adhere to the glass (K), the other one being intended to adhere to the edge of the seat (14) of the glass which is defined on the bodywork (C).

3. A weather strip according to claim 2, wherein the band (11a) has visible aesthetic moldings.

4. A weather strip according to claim 2, wherein the ridge (11b) has an extension which is approximately equal to the thickness of the glass (K).

5. A weather strip according to claim 1, wherein the edge of the insert (13) embedded in the second profiled element (12) is folded substantially at right angle with respect to the body of said insert.

6. A weather strip according to claim 1, wherein the second profiled element (12) is constituted by a wing with a substantially ellipsoid cross section.

7. A weather strip according to claim 1 and any one of claims 2 to 6, wherein the surface of the insert is discontinuous.

8. A weather strip according to claims 1 and 7, wherein the insert (13) is of the known type termed "Wire-Carrier" constituted by steel wire (15) bent in the shape of a sinusoid and reinforced with textile fibers (16) which interweave with said wire.

9. A weather strip according to claim 1 and any one of claims 2 to 8, wherein the insert (13) interposed between the first and the second profiled elements (11,12) extends, after folding, on the glass region intended to receive the adhesive bead (CA) to support the second profiled element (12) above said bead; the visible part of the insert being partially embedded in the adhesive bead when the glass (K) is installed.

10. A weather strip according to any one of the preceding claims, characterized in that it is installed closed in a loop by means of a joint (G) vulcanized in a mold.

11. A method for pre-assembling the weather strip according to claims 1 to 10 on the glass, characterized by the following succession of operative steps:

- laying down the weather strip on a resting plane provided with a centering and retention groove,
- lowering a funnel-shaped mask for guiding the glass, insertion of the glass in the mask and placement thereof in engagement with the respective L-shaped seat of the underlying first profiled element,
- extraction of the mask and folding of the metallic insert on the glass by continuous rolling.

## Patentansprüche

1. Dichtungsprofil aus Elastomer und Metall für feststehende Fenster in Kraftfahrzeugen, **gekennzeichnet durch** ein erstes profiliertes Element (11) aus Elastomer für die Anordnung auf der Außenseite einer Scheibe (K) zur Einbindung der Scheibe in eine Karosserie (C) und ein zweites profiliertes Element (12) aus Elastoner für die Anordnung auf der Innenseite der Scheibe zur Abdeckung eines adhäsiven Wulstes (CA) und durch eine deformierbare, metallische Einlage (13) zwischen am damit verbundenen ersten und zweiten Element, wobei die Ränder der Einlage (13) durch Koextrudierung in den profilierten Elementer (11, 12) eingebunden sind, die ihrerseits an die entsprechenden Seiten der Scheibe durch eine Faltung der Einlage bei der Anbringung des Dichtungsprofiles angelegt sind.

2. Dichtungsprofil nach Anspruch 1, an dem das erste profilierte Element (11) ein verbreitertes Band (11a) und eine Rippe (11b) umfaßt, die einen gedrückten L-förmigen Sitz für die Aufnahme des Randes der Scheibe (K) bildet und wobei das Band und die Rippe im Querschnitt insgesamt ein T-förmiges Profil haben, das zwei Flügel des Bandes bildet, von denen der eine an der Scheibe (K) haftet und die andere am Rand des an der Karosserie (C) gebildeten Sitzes (14) für die Scheibe.

3. Dichtungsprofil nach Anspruch 2, an dem das Band (11a) sichtseitig eine ästhetische Formgebung aufweist.

4. Dichtungsprofil nach Anspruch 2, an dem die Rippe (11b) eine der Stärke der Scheibe (K) angenähert gleiche Längserstreckung aufweist.

5. Dichtungsprofil nach Anspruch 1, an dem der in das zweite profilierte Element (12) eingebundene Rand der Einlage (13) in bezug auf diese im wesentlichen rechtwinklig abgebogen ist.

6. Dichtungsprofil nach Anspruch 1, an dem das zweite profilierte Element (12) aus einem Flügel mit im wesentlichen elliptischem Querschnitt gebildet ist.

7. Dichtungsprofil nach Anspruch 1 und jedem der Ansprüche 2 bis 6, an dem die Fläche der Einlage diskontinuierlich ausgebildet ist.

8. Dichtungsprofil nach Ansprüchen 1 bis 7, an dem die Einlage (13) in Form eines bekannten, sogenannten "Aufhängedrahtes"aus Stahldraht (15) gebildet ist, gebogen in Form einer Sinuskurve und verstärkt mit eingewebten Textilfasern (16).

9. Dichtungsprofil nach Anspruch 1 und jedem der Ansprüche 2 bis 8, an dem die zwischen dem erster und zweiten Element (11, 12) angeordnete Einlage (13) sich nach der Faltung an den Scheibenbereich erstreckt, der für die Aufnahme des Randwulstes (CA) bestimmt ist, um das zweite profilierte Element (12) über dem Randwulst zu tragen, wobei der sichtbare Teil der Einlage teilweise in den Wulst nach Installation der Scheibe (K) eingebettet ist.

10. Dichtungsprofil nach jedem der vorhergehenden Ansprüche, **dadurch gekennzeichnet**, daß es in Form einer geschlossenen Schlaufe installiert und die Verbindungsstelle (G) in einer Form vulkanisiert ist.

11. Verfahren zur Vormontierung des Dichtungspfrofiles nach Ansprüchen 1 bis 10 an der Scheibe, gekennzeichnet durch die folgenden Arbeitsschritte:
    - Ablegen des Dichtungsprofiles auf einer Auflagefläche mit einer Zentrierungs- und Haltenut,
    - Absenken einer trichterförmigen Scheibenführungsmaske, Einbringung der Scheibe in die Maske und deren anschmiegende Plazierung an den entsprechenden L-förmigen Sitz des darunter befindlichen ersten profilierten Elementes,
    - Entfernung der Maske und Anfalten der metallischen Einlage an die Scheibe durch kontinuierliches Anrollen.

## Revendications

1. Bande d'étanchéité à structure mixte pour des vitres fixes collées de véhicules à moteur, caractérisisée par un premier élément profilé (11) en élastomère prévu pour être placé sur le côté externe d'une vitre (K) pour le couplage de ladite vitre à une carrosserie (C), un second élément profilé (12) en élastomètre prévu pour être placé à l'intérieur de la vitre pour masquer un cordon adhésif (CA) et un insert métallique déformable (13) interposé entre et raccordant lesdits premier et second éléments profilés, des bords d'extrémité dudit insert (13) étant noyés par coextrusion dans les éléments profilés correspondants (11, 12) qui se placent eux-mêmes dans les côtés externe et interne respectifs de la vitre à l'aide d'un pliage dudit insert obtenu pendand l'application de la bande d'étanchéité.

2. Bande d'étanchéité selon la revendication 1, dans laquelle ledit premier élément profilé externe (11) comprend une bande élargie (11a) et une nervure (11b) définissant un siège en creux en forme de L prévu pour recevoir le bord de la vitre (K) et dans laquelle la bande et la nervure possèdent, en section droite, un profil global en forme de T définissant deux ailes de la bande dont une est prévue pour adhérer à la vitre (K) et dont l'autre est prévue pour adhérer au bord du siège (14) de la vitre qui est définie sur la carrosserie (C).

3. Bande d'étanchéité selon la revendication 2, dans laquelle la bande (11a) possède des moulages visibles décoratifs.

4. Bande d'étanchéité selon la revendication 2, dans laquelle la nervure (11b) possède une extension qui est à peu près égale à l'épaisseur de la vitre (K).

5. Bande d'étanchéité selon la revendication 1, dans laquelle le bord de l'insert (13), noyé dans le second élément profilé (12), est plié globalement à angle droit par rapport au corps dudit insert.

6. Bande d'étanchéité selon la revendication 1, dans laquelle le second élément profilé (12) est constitué d'une aile possédant une section droite globale en éllipsoïde.

7. Bande d'étanchéité selon la revendication 1 et une quelconque des revendications 2 à 6, dans laquelle la surface de l'insert est discontinue.

8. Bande d'étanchéité selon les revendications 1 ou 7, dans laquelle l'insert (13) est du type connu appelé "Support de Câble" constitué par un cable en acier (15) courbé sous la forme d'une sinusoïde et renforcé par des fibres textiles (16) tissées avec ledit cable.

9. Bande d'étanchéité selon la revendication 1 et une quelconque des revendications 2 à 8, dans laquelle l'insert (13), interposé entre les premier et second éléments profilés (11, 12), s'étend, après pliage, sur la zone de la vitre prévue pour recevoir le cordon adhésif (CA) pour supporter le second élément profilé (12) au dessus dudit cordon, la partie visible de l'insert étant partiellement noyé dans le cordon adhésif lorsque la vitre (K) est installée.

10. Bande d'étanchéité selon une quelconque des revendications précédentes, caractérisée en ce qu'elle est installée sous la forme d'une boucle fermée au moyen d'un joint (G) vulcanisé dans un moule.

11. Procédé de pré-assemblage de la bande d'étanchéité selon les revendications 1 à 10 sur la vitre, caractérisé par la suite des étapes suivantes :
    - étalement de la bande d'étanchéité sur un plan de repos muni d'une gorge de centrage et de maintien;
    - abaissement d'un masque en forme d'entonnoir pour guider la vitre, insertion de la vitre dans le masque et son placement en coopération avec le siège respectif en forme de L du premier élément profilé sous-jacent et
    - extraction du masque et pliage de l'insert métallique sur la vitre par roulage en continu.

EP 0 393 475 B1

Fig. 1

Fig. 2

Fig. 3

Fig. 4

Fig. 5

7

Fig. 6a

Fig. 6b

Fig. 6c

Fig. 6d

Fig. 7

Fig. 8